(19) Europäisches Patentamt
European Patent Office
Office européen des brevets

(11) **EP 3 267 711 B1**

(12) **EUROPEAN PATENT SPECIFICATION**

(45) Date of publication and mention
of the grant of the patent:
**05.08.2020 Bulletin 2020/32**

(51) Int Cl.:
*H04W 72/04* (2009.01)   *H04B 1/713* (2011.01)
*H04B 1/7143* (2011.01)   *H04W 16/10* (2009.01)

(21) Application number: **15883773.2**

(22) Date of filing: **16.07.2015**

(86) International application number:
**PCT/CN2015/084266**

(87) International publication number:
**WO 2016/138718 (09.09.2016 Gazette 2016/36)**

(54) **FREQUENCY HOPPING METHOD AND DEVICE**

FREQUENZSPRUNGVERFAHREN UND VORRICHTUNG

PROCÉDÉ ET DISPOSITIF DE SAUT DE FRÉQUENCE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **05.03.2015 CN 201510099110**

(43) Date of publication of application:
**10.01.2018 Bulletin 2018/02**

(73) Proprietor: **ZTE Corporation
Shenzhen, Guangdong 518057 (CN)**

(72) Inventor: **HOU, Xiaohui
Shenzhen
Guangdong 518057 (CN)**

(74) Representative: **Aipex B.V.
World Trade Center Rotterdam / unit 607
Beursplein 37
3011 AA Rotterdam (NL)**

(56) References cited:
**CN-A- 101 030 791    CN-A- 101 030 801
CN-A- 101 325 432    CN-A- 101 877 911
US-A1- 2005 078 737    US-A1- 2012 114 014
US-A1- 2014 036 864    US-B1- 6 272 348**

# Description

## TECHNICAL FIELD

The present invention relates to the field of communications, and particularly to a frequency hopping method and device.

## BACKGROUND

A Long-Term Evolution (LTE) system makes cells geographically closer together have interferences usually because same-frequency networking exists, affecting wireless performance of these cells. At present, with respect to elimination of these interferences, the LTE system coordinates these interferences mainly through a coordinated multi-point transmission and reception (referred to as CoMP) technology, an inter-cell interference coordination (referred to as ICIC) technology, an enhanced inter-cell interference coordination (referred to as eICIC) technology and other technologies. These technologies have proposed more stringent requirements for accuracy of estimating an X2 interface (an interconnection interface between eNodeBs), channel state information (referred to as CSI), and the like. Accordingly, an actual network implementation will be higher in complexity.

At present, for a problem with high implementation complexity of a technology of eliminating interferences in the LTE system in the related art, an effective solution has not been proposed. Further relevant technologies are also known from US 2005/078737 A1 (CRAIG STEPHEN [SE] ET AL) 14 April 2005 (2005-04-14) which relates to frequency offset hopping for telecommunications; US 2014/036864 A1 (ARNOTT ROBERT [GB] ET AL) 6 February 2014 (2014-02-06) which relates to frequency hopping; US 6 272 348 B1 (SAARIO EIJA [FI] ET AL) 7 August 2001 (2001-08-07) which relates to method for channel allocation; and US 2012/114014 A1 (GAAL PETER [US] ET AL) 10 May 2012 (2012-05-10) which relates to using precoding vector switching in uplink shared channel.

## SUMMARY

Embodiments of the present invention provide a frequency hopping method and device as defined in the attached independent claims, to at least solve a problem of only adopting a technical solution with high implementation complexity in order to eliminate interferences of same-frequency networking in a LTE system in the related art. Further improvements arc provided in the dependent claims.

According to one embodiment of the present invention, a frequency hopping method is provided, including: receiving a connection establishment request by a network side device; and transmitting, by the network side device, a frequency hopping resource corresponding to a cell covered by the network side device to a terminal according to the request, where the network side device and the terminal are located in the same communication system adopting the same-frequency networking.

In the embodiment of the present invention, the frequency hopping resource includes at least one of frequency hopping frequency point set, frequency hopping time interval, frequency hopping frequency offset, frequency hopping mode, and frequency hopping sequence, where the frequency hopping mode includes cyclic frequency hopping mode or random frequency hopping mode, where the frequency point set is a frequency hopping set of a traffic channel without dominant frequency point.

In the embodiment of the present invention, the frequency hopping time interval includes time of one subframe, time of one time slot, and time of one orthogonal frequency division multiplexing (OFDM) symbol.

In the embodiment of the present invention, the frequency hopping sequence meets the following condition: $HS=\{f_{mod((i+O)/N)}\}$, $0\leq i\leq L-1$, where HS denotes the frequency hopping sequence, i denotes a serial number of a frequency hopping frequency point, O denotes the frequency hopping frequency offset, L denotes a length of the frequency hopping sequence, and N denotes the number of the cells.

In the embodiment of the present invention, in a case that the frequency hopping mode is the random frequency hopping mode, different random frequency hopping sequences are orthogonal.

In the embodiment of the present invention, a manner of transmitting, by the network side device, the frequency hopping resource corresponding to the cell covered by the network side device to the terminal according to the request includes one of transmitting the frequency hopping resource to the terminal through a physical downlink control channel (referred to as PDCCH) corresponding to the dominant frequency point in the communication system; and transmitting the frequency hopping resource to the terminal through a downlink control channel (PDCCH) affiliated to a frequency hopping channel accessed by the terminal.

In the embodiment of the present invention, the dominant frequency point includes one of frequency point where a supplemental channel (referred to as SCH) is located, frequency point where a physical broadcast channel (referred to as PBCH) is located, or frequency point where the downlink control channel (PDCCH) is located.

In the embodiment of the present invention, the network side device allocates different frequency hopping frequency offsets for different cells.

According to another embodiment of the present invention, a frequency hopping method is provided, including: transmitting a connection establishment request to a network side device; receiving a frequency hopping resource, which is transmitted by the network side device, corresponding to a cell covered by the network side device, where the network side device and the terminal are located in the same communication system adopting same-frequency networking; and performing frequency hopping according to the frequency hopping resource.

In the embodiment of the present invention, the frequency hopping resource includes at least one of frequency hopping frequency point set, frequency hopping time interval, frequency hopping frequency offset, frequency hopping mode, and frequency hopping sequence, where the frequency hopping mode includes cyclic frequency hopping mode or random frequency hopping mode, where the frequency point set is a frequency hopping set of a traffic channel without dominant frequency point.

In the embodiment of the present invention, the frequency hopping time interval includes time of one subframe, time of one time slot, and time of one orthogonal frequency division multiplexing (OFDM) symbol.

According to further embodiment of the present invention, a frequency hopping device is provided, and the device is applied to a network side device. The device includes a receiving module, which is configured to receive a connection establishment request; a transmitting module, which is configured to transmit a frequency hopping resource corresponding to a cell covered by the network side device to a terminal according to the request, where the network side device and the terminal are located in the same communication system adopting same-frequency networking.

In the embodiment of the present invention, the frequency hopping resource includes at least one of frequency hopping frequency point set, frequency hopping time interval, frequency hopping frequency offset, frequency hopping mode, and frequency hopping sequence, where the frequency hopping mode includes cyclic frequency hopping mode or random frequency hopping mode, where the frequency point set is a frequency hopping set of a traffic channel without dominant frequency point.

In the embodiment of the present invention, the frequency hopping time interval includes time of one subframe, time of one time slot, and time of one orthogonal frequency division multiplexing (OFDM) symbol.

In the embodiment of the present invention, the frequency hopping sequence meets the following condition: $HS=\{f_{mod((i+O)/N)}\}$, $0\leq i\leq L-1$, where HS denotes the frequency hopping sequence, i denotes a serial number of a frequency hopping frequency point, O denotes the frequency hopping frequency offset, L denotes a length of the frequency hopping sequence, and N denotes the number of the cells.

In the embodiment of the present invention, in a case that the frequency hopping mode is the random frequency hopping mode, different random frequency hopping sequences are orthogonal.

In the embodiment of the present invention, the transmitting module includes at least one of a first transmitting unit, which is configured to transmit the frequency hopping resource to the terminal through a downlink control channel (PDCCH) corresponding to a dominant frequency point in the communication system; and a second transmitting unit, which is configured to transmit the frequency hopping resource to the terminal through a downlink control channel (PDCCH) affiliated to a frequency hopping channel accessed by the terminal.

In the embodiment of the present invention, the dominant frequency point includes one of frequency point where a supplemental channel (SCH) is located, frequency point where a physical broadcast channel (PBCH) is located, or frequency point where the downlink control channel (PDCCH) is located.

In the embodiment of the present invention, the network side device allocates different frequency hopping frequency offsets for different cells.

According to yet another embodiment of the present invention, a frequency hopping device is provided, and the device includes a transmitting module, which is configured to transmit a connection establishment request to a network side device; a receiving module, which is configured to receive a frequency hopping resource, which is transmitted by the network side device, corresponding to a cell covered by the network side device, where the network side device and the terminal are located in the same communication system adopting same-frequency networking; and a frequency hopping module, which is configured to perform frequency hopping according to the frequency hopping resource.

In the embodiment of the present invention, the frequency hopping resource includes at least one of frequency hopping frequency point set, frequency hopping time interval, frequency hopping frequency offset, frequency hopping mode, and frequency hopping sequence, where the frequency hopping mode includes cyclic frequency hopping mode or random frequency hopping mode, where the frequency point set is a frequency hopping set of a traffic channel without dominant frequency point.

In the embodiment of the present invention, the frequency hopping time interval includes time of one subframe, time of one time slot, and time of one orthogonal frequency division multiplexing (OFDM) symbol.

According to still another embodiment of the present invention, a computer-readable storage medium is provided, the computer-readable storage medium stores executable instructions that, when executed by an electronic device, cause the electronic device to:

receive a connection establishment request; and transmit a frequency hopping resource corresponding to a cell covered by a network side device to a terminal according to the request; wherein the network side device and the terminal are located in a same communication system adopting same-frequency networking;

or, transmit a connection establishment request to a network side device; receive a frequency hopping resource, which is transmitted by the network side device, corresponding to a cell covered by the network side device, wherein the network side device and the terminal are located in a same communication system adopting same-frequency networking; and perform frequency hopping according to the frequency hopping resource.

By means of the embodiments of the present invention, the network side device receives a connection establishment request, then the network side device transmits a frequency hopping resource corresponding to a cell covered by the network side device to a terminal according to the connection establishment request, and the terminal performs frequency hopping according to the frequency hopping resource. A novel frequency hopping method of a LTE system is provided, and the method can effectively reduce interferences in same-frequency networking in the LTE system. A problem of only adopting a technical solution with high implementation complexity in the related art to eliminate interferences in the same-frequency networking in the LTE system is solved, and then an effect of eliminating interferences in the same-frequency networking in the LTE system under a condition of low implementation complexity is achieved.

## BRIEF DESCRIPTION OF DRAWINGS

Accompanying drawings described herein are used to provide a further understanding of the present invention, which form a part of this application, and exemplary embodiments of the present invention and its description are intended to explain the present invention and are not to be construed as improperly limiting the present invention. In the accompanying drawings:

FIG. 1 is a flow diagram illustrating a frequency hopping method according to an embodiment of the present invention;

FIG. 2 is a flow diagram illustrating another frequency hopping method according to an embodiment of the present invention;

FIG. 3 is a block diagram illustrating a structure of a frequency hopping device according to a preferred embodiment of the present invention;

FIG. 4 is a block diagram illustrating a structure of another frequency hopping device according to an embodiment of the present invention;

FIG. 5 is a block diagram illustrating a structure of still another frequency hopping device according to an embodiment of the present invention;

FIG. 6 is a flow diagram illustrating yet another frequency hopping method according to an embodiment of the present invention;

FIG. 7 is a frequency hopping timing diagram according to an embodiment of the present invention; and

FIG. 8 is another frequency hopping timing diagram according to an embodiment of the present invention.

## DETAILED DESCRIPTION

Hereinafter, the present invention will be described in detail with reference to accompanying drawings and in conjunction with embodiments. It is to be noted that the embodiments and features in the embodiments in the present application may be combined with each other without conflict.

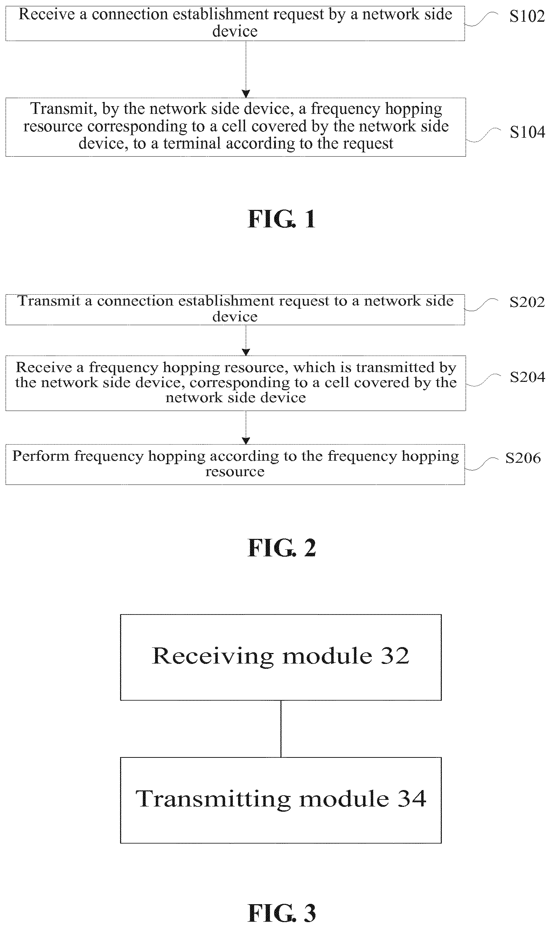

In the present embodiment, a frequency hopping method at a network side is provided. FIG. 1 is a flow diagram illustrating a frequency hopping method according to an embodiment of the present invention. As shown in FIG. 1, the frequency hopping method includes following steps.

In S102, a network side device receives a connection establishment request; and

in S104, the network side device transmits a frequency hopping resource corresponding to a cell covered by the network side device to a terminal according to the request.

By means of the steps, the network side device receives the connection establishment request, then the network side device transmits the frequency hopping resource corresponding to the cell covered by the network side device to the terminal according to the connection establishment request, and the terminal performs frequency hopping according to the frequency hopping resource. A novel frequency hopping method of a LTE system is provided, and the method can effectively reduce interferences in same-frequency networking in the LTE system. A problem of only adopting a technical solution with high implementation complexity in the related art to eliminate interferences in the same-frequency networking in the LTE system is solved, and then an effect of eliminating interferences in the same-frequency networking in the LTE system under a condition of low implementation complexity is achieved.

In an optional embodiment, the network side device may be, but is not limited to, an LTE base station, and the terminal may be, but is not limited to, a mobile phone, an on-line card, and a portable computer, where the network side device and the terminal are located in the same communication system adopting the same-frequency networking under a LTE network. That is, the LTE base station and the mobile phone are located in the same cell under the LTE network.

The frequency hopping resource involved in the step S104 may include multiple types of information, and will be described below. In an optional embodiment, the frequency hopping resource may include one or more of frequency hopping frequency point set, frequency hopping time interval, frequency hopping frequency offset, frequency hopping mode, and frequency hopping sequence. The frequency hopping mode includes cyclic frequency hopping mode or random frequency hopping mode, where the frequency point set is a frequency hopping set of a traffic channel without dominant frequency point.

The frequency hopping time interval included in the frequency hopping resource may also include multiple types of information. In an optional embodiment, the frequency hopping time interval may include time of one subframe, time of one time slot, and time of one orthogonal frequency division multiplexing (OFDM) symbol.

In an optional embodiment, the frequency hopping sequence included in the frequency hopping resource meets the following condition:

$HS=\{f_{mod((i+O)/N)}\}$, $0 \leq i \leq L-1$, where HS denotes the frequency hopping sequence, i denotes a serial number of a frequency hopping frequency point, O denotes the frequency hopping frequency offset, L denotes a length of the frequency hopping sequence, and N denotes the number of the cells. In a case where the frequency hopping mode is the random frequency hopping mode, different random frequency hopping sequences are orthogonal. The network side device allocates different frequency hopping frequency offsets for different cells.

Transmitting, by the network side device, the frequency hopping resource corresponding to the cell covered by the network side device to the terminal according to the request is involved in the step S104, in an optional embodiment, the network side device transmits the frequency hopping resource to the terminal through a downlink control channel (PDCCH) corresponding to a dominant frequency point in the communication system according to the request; and in another optional embodiment, the network side device transmits the frequency hopping resource to the terminal through a downlink control channel (PDCCH) affiliated to a frequency hopping channel accessed by the terminal according to the request.

In an optional embodiment, the dominant frequency point may include frequency point where a supplemental channel (SCH) is located, frequency point where a physical broadcast channel (PBCH) is located, or frequency point where the downlink control channel (PDCCH) is located.

In another embodiment, a frequency hopping method at a terminal side is further provided. FIG. 2 is a flow diagram illustrating another frequency hopping method according to an embodiment of the present invention. As shown in FIG. 2, the frequency hopping method includes following steps.

In S202, a connection establishment request is transmitted to a network side device; in S204, a frequency hopping resource, which is transmitted by the network side device, corresponding to a cell covered by the network side device is received; and in S206, frequency hopping is performed according to the frequency hopping resource.

By means of the steps, in an optional embodiment, the network side device may be, but is not limited to, an LTE base station, and the terminal may be, but is not limited to, a mobile phone, an on-line card, and a portable computer, where the network side device and the terminal are located in the same communication system adopting the same-frequency networking under a LTE network. That is, the LTE base station and the mobile phone are located in the same cell under the LTE network.

The frequency hopping resource may include multiple types of information, and will be described below. In an optional embodiment, the frequency hopping resource may include one or more of frequency hopping frequency point set, frequency hopping time interval, frequency hopping frequency offset, frequency hopping mode, and frequency hopping sequence. The frequency hopping mode includes cyclic frequency hopping mode or random frequency hopping mode, where the frequency point set is a frequency hopping set of a traffic channel without dominant frequency point.

In an optional embodiment, the frequency hopping time interval may include time of one subframe, time of one time slot, and time of one orthogonal frequency division multiplexing (OFDM) symbol.

In the present embodiment, a frequency hopping device for realizing the embodiments and preferred implementations is further provided, and contents that have been described will not be described in detail. As used herein, the term "module" may implement a combination of software and/or hardware with a predetermined function. Although the device described in following embodiments is preferably implemented in software, implementations of hardware, or a combination of software and hardware is also possible and envisioned.

FIG. 3 is a block diagram illustrating a structure of a frequency hopping device according to an embodiment of the present invention. The device is applied to a network side. As shown in FIG. 3, the device includes a receiving module 32 and a transmitting module 34.

The receiving module 32 is configured to receive a connection establishment request; and the transmitting module 34 is configured to transmit a frequency hopping resource corresponding to a cell covered by the network side device to a terminal according to the request, where the network side device and the terminal are located in the same communication system adopting same-frequency networking.

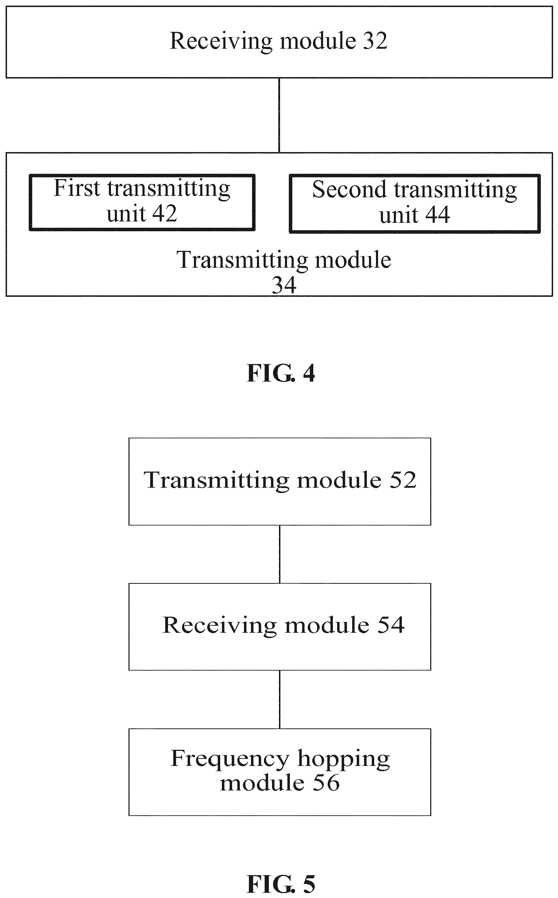

FIG. 4 is a block diagram illustrating a structure of still another frequency hopping device according to an embodiment of the present invention. The device is applied to a network side. As shown in FIG. 4, except for the receiving module 32, the transmitting module 34 includes a first transmitting unit 42 and a second transmitting unit 44.

The first transmitting unit 42 is configured to transmit the frequency hopping resource to the terminal through a downlink control channel (PDCCH) corresponding to a dominant frequency point in the communication system; and
the second transmitting unit 44 is configured to transmit the frequency hopping resource to the terminal through a downlink control channel (PDCCH) affiliated to a frequency hopping channel accessed by the terminal.

In an optional embodiment, the network side device may be, but is not limited to, an LTE base station, and the terminal may be, but is not limited to, a mobile phone, an on-line card, and a portable computer, where the network side device and the terminal are located in the same communication system adopting the same-frequency networking under a LTE network. That is, the LTE base station and the mobile phone are located in the same cell under the LTE network.

The frequency hopping resource involved in the transmitting module 34 may include multiple types of information, and will be described below. In an optional embodiment, the frequency hopping resource may include one or more of frequency hopping frequency point set, frequency hopping time interval, frequency hopping frequency offset, frequency hopping mode, and frequency hopping sequence. The frequency hopping mode includes cyclic frequency hopping mode or random frequency hopping mode, where the frequency point set is a frequency hopping set of a traffic channel without dominant frequency point.

The frequency hopping time interval included in the frequency hopping resource may also include multiple types of information. In an optional embodiment, the frequency hopping time interval may include time of one subframe, time of one time slot, and time of one orthogonal frequency division multiplexing (OFDM) symbol.

In an optional embodiment, the frequency hopping sequence included in the frequency hopping resource meets the following condition:

$HS=\{f_{mod((i+O)/N)}\}$, $0\leq i\leq L-1$, where HS denotes the frequency hopping sequence, i denotes a serial number of a frequency hopping frequency point, O denotes the frequency hopping frequency offset, L denotes a length of the frequency hopping sequence, and N denotes the number of the cells. In a case where the frequency hopping mode is the random frequency hopping mode, different random frequency hopping sequences are orthogonal. The network side device allocates different frequency hopping frequency offsets for different cells.

Transmitting, by the network side device, the frequency hopping resource corresponding to the cell covered by the network side device to the terminal according to the request is involved in the transmitting module 34, in an optional embodiment, the network side device transmits the frequency hopping resource to the terminal through a downlink control channel (PDCCH) corresponding to a dominant frequency point in the communication system according to the request; and in another optional embodiment, the network side device transmits the frequency hopping resource to the terminal through a downlink control channel (PDCCH) affiliated to a frequency hopping channel accessed by the terminal according to the request.

In an optional embodiment, the dominant frequency point may include frequency point where a supplemental channel (SCH) is located, frequency point where a physical broadcast channel (PBCH) is located, or frequency point where the downlink control channel (PDCCH) is located.

FIG. 5 is a block diagram illustrating a structure of still another frequency hopping device according to an embodiment of the present invention. The device is applied to a terminal side. As shown in FIG. 5, the device includes a transmitting module 52, a receiving module 54 and a frequency hopping module 56.

The transmitting module 52 is configured to transmit a connection establishment request to a network side device;
the receiving module 54 is configured to receive a frequency hopping resource, which is transmitted by the network side device, corresponding to a cell covered by the network side device, where the network side device and the terminal are located in the same communication system adopting same-frequency networking; and
the frequency hopping module 56 is configured to perform frequency hopping according to the frequency hopping resource.

By means of the steps, in an optional embodiment, the network side device may be, but is not limited to, an LTE base station, and the terminal may be, but is not limited to, a mobile phone, an on-line card, and a portable computer, where the network side device and the terminal are located in the same communication system adopting the same-frequency networking under a LTE network. That is, the LTE base station and the mobile phone are located in the same cell under the LTE network.

The frequency hopping resource may include multiple types of information, and will be described below. In an optional embodiment, the frequency hopping resource may include one or more of frequency hopping frequency point set, frequency hopping time interval, frequency hopping frequency offset, frequency hopping mode, and frequency hopping sequence. The frequency hopping mode includes cyclic frequency hopping mode or random frequency hopping mode, where the frequency point set is a frequency hopping set of a traffic channel without dominant frequency point.

In an optional embodiment, the frequency hopping time interval may include time of one subframe, time of one time slot, and time of one orthogonal frequency division multiplexing (OFDM) symbol.

The embodiments and their optional implementations are incorporated in following optional embodiments in light of the problems in the related art, which are described in detail with reference to the optional embodiments.

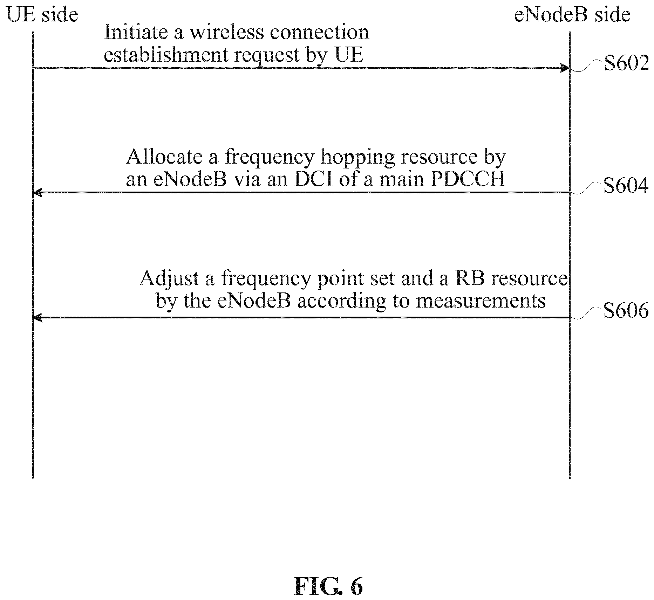

FIG. 6 is a flow diagram illustrating yet another frequency hopping method according to an embodiment of the present invention. As shown in FIG. 6, the frequency hopping method includes following steps.

In S602, an UE initiates a wireless connection establishment request;

in S604, an eNodeB allocates a frequency hopping resource through a DCI of a main PDCCH; and

in S606, the eNodeB adjusts a frequency point set and a RB resource according to measurements.

By adopting the steps, three or more frequency points are needed in networking under frequency hopping in a specific frequency hopping process, where the first frequency point fo is a frequency point where a supplementary channel (SCH) is located, a frequency point where a physical broadcast channel (PBCH) is located, or a frequency point where the downlink control channel (PDCCH) is located, fo is a dominant frequency point, and in order to quickly establish a synchronization relationship between a mobile phone and a cell of a LTE base station, and to enable the mobile phone to obtain a frequency hopping relationship between a traffic channel and a control channel corresponding to the traffic channel from the network, fo must not hop.

In addition to the $f_0$, a frequency hopping set of the traffic channel may be formed. It is assumed in the present embodiment that there are N frequency points, the frequency hopping set is $\{g_i\}$, and $0 \leq i \leq N-1$ and i is a positive integer. In order to not affect the existing protocol as much as possible, in the specific implementation, bandwidths of all frequency points in the frequency hopping set can be identical.

The frequency hopping is carried out according to the following principle. The frequency hopping time interval can be, but is not limited to, time (that is, 1 ms) of one subframe, time of one time slot, or time of one OFDM symbol, and each cell has own particular frequency hopping set and frequency hopping frequency offset.

The frequency hopping set, the frequency hopping frequency offset and the frequency hopping mode of the cell are informed to the UE through a DCI format carried by the PDCCH channel on the $f_0$, this format also needs to specify corresponding formats of associated control channels of the PDCCH, PUCCH, PHICH and the like affiliated to the frequency hopping channel, and if no special instruction is made, the corresponding formats of associated control channels of the PDCCH, PUCCH, PHICH and the like affiliated to the frequency hopping channel are considered to be identical to the dominant frequency point in terms of frequency domain configurations.

When HSM=0, the frequency hopping mode is the cyclic frequency hopping mode, and frequency hopping is performed sequentially in accordance with the frequency point set.

When the HSM is not 0, the frequency hopping mode is the random frequency hopping mode. A method for generating a random sequence is not limited here, to ensure that different HSMs produce orthogonal random sequences, that is, no frequency points at the same radio frequency emit signals at any time.

In the random frequency hopping mode and the cyclic frequency hopping mode, in order to avoid mutual interference between MIMO antenna groups of the cell, different frequency hopping frequency offsets are allocated for different MIMO mode groups, where one MIMO mode group corresponds to one cell. In the present embodiment, the total number of MIMO groups is N, and the corresponding offsets can be configured as 0, 1, ..., N-1. For a certain frequency hopping frequency point set, a certain HSM generates a hopping sequence $\{g_i\}$, where $0 \leq i \leq L-1$. For example, the frequency hopping sequence HS generated for the MIMO group with an offset 0 is $\{g_i\}$, where $0 \leq i \leq L-1$, and L denotes a length of the frequency hopping sequence, and can be allocated. A frequency hopping sequence HS generated for the MIMO group with an offset O is $\{g_{mod((i+O)/N)}\}$, where $0 \leq i \leq L-1$, where HS denotes the frequency hopping sequence, i denotes a serial number of a frequency hopping frequency point, O denotes the frequency hopping frequency offset, L denotes the length of the frequency hopping sequence, and N is the number of the cells.

In a specific implementation process, an operator has six frequency points, respectively, $f_0$, $f_1$, $f_2$, $g_0$, $g_1$ and $g_2$, a base station has three cells, respectively, cell 1, cell 2 and cell 3. A dominant frequency point of the cell 1 is $f_0$, a dominant frequency point of the cell 2 is $f_1$, and a dominant frequency point of the cell 3 is $f_2$. In the cyclic frequency hopping mode, a frequency hopping sequence of the cell 1 is $\{g_0, g_1, g_2\}$, a frequency hopping sequence of the cell 2 is $\{g_1, g_2, g_0\}$, and a frequency hopping sequence of the cell 3 is $\{g_2, g_1, g_0\}$. The $f_0$, the $f_1$ and the $f_2$ as the dominant frequency points may be smaller in bandwidths (such as 5 MHz), which are mainly used to carry signalings; and the $g_2$, the $g_1$ and the $g_0$ can be appropriately large, such as 20 MHz. Specifically, they is determined according to an actual spectrum of the operator.

When the cyclic frequency hopping mode is adopted, MAI=(FN+FHO) modulo N, where MAI is an index of the $\{g_0, g_1, g_2\}$.

When the random frequency hopping mode is adopted, a frequency hopping frequency point of the present frame is obtained by calculation according to a frame number and an allocated random number.

For instance, the following frequency hopping algorithm may be used,

If HSN!=0, the algorithm is as follows:

    TIR, integer (0..63): T1R=FN modulo 64;
    T3, integer (0..63): T3 = T1R modulo 26;
    M, integer (0 ... 152): M=T2 + RNTABLE((HSN xor TIR) + T3)
    S, integer (0 ... N-1): M'=M modulo (2 ^ NBIN)

T' = T3 modulo (2 ^ NBIN)
if M' < N then:
S = M'
else:
S = (M'+T') modulo N
MAI = (S + FHO) modulo N;

A corresponding absolute radio frequency channel number (ARFCN) is obtained from a mobile allocation (MA) table of the present channel in a parameter region by using a mobile allocation indicator (MAI) as an index according to the MAI calculated by the frequency hopping algorithm.

The dominant frequency point is allocated with important uplink and downlink control channels such as the PDCCH. A specific configuration of a control channel affiliated to a bandwidth of the frequency hopping frequency point may be described by a SRB system message of the dominant frequency point, and if no special instruction is made, it is considered to be consistent with the dominant frequency point in terms of configurations. The frequency hopping frequency point may not be allocated with the control channel.

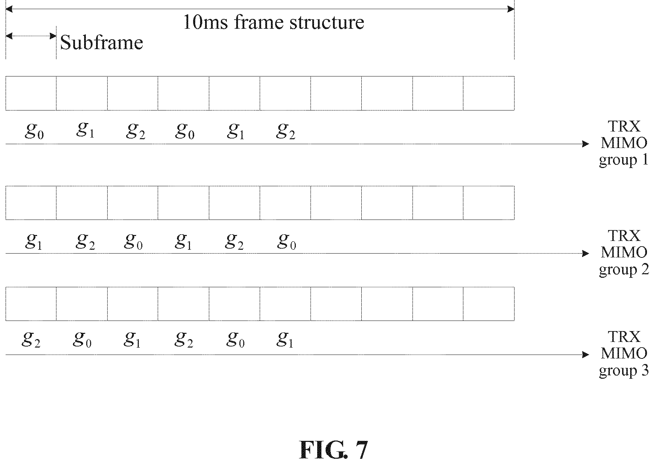

FIG. 7 is a frequency hopping timing diagram according to an embodiment of the present invention. Frequency hopping is performed in a cyclic mode by taking subframe as unit, and a first subframe of each frame corresponds to a first frequency point of a frequency hopping sequence, and a timing relationship is as shown in FIG. 7. It is to be noted that TRX in FIG. 7 is an abbreviation of Transmission Receiver Unit, and MIMO is an abbreviation of Multiple-Input Multiple-Output.

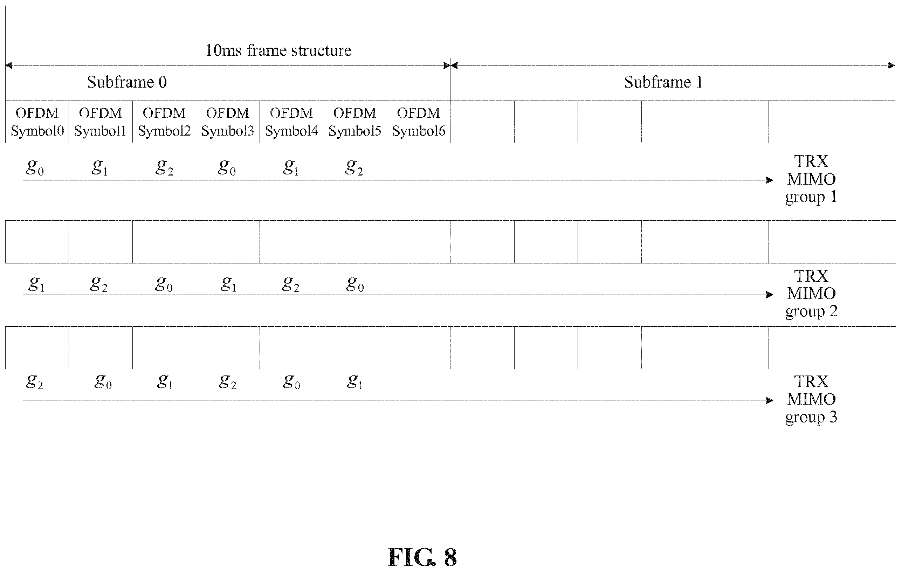

FIG. 8 is another frequency hopping timing diagram according to an embodiment of the present invention. Frequency hopping is performed in a cyclic mode by taking OFDM symbol as unit, and a first subframe of each frame corresponds to a first frequency point of a frequency hopping sequence, and a timing relationship is as shown in FIG. 8.

At the time of frequency hopping, a resource block (referred to as RB) resource allocated for each subframe may be different, and the resource must be firstly allocated by a first transmitting unit 42 via a downlink control channel (PDCCH) of a dominant frequency point $f_0$, and when UE is normally accessed to a frequency hopping channel, the resource may be adjusted by a second transmitting unit 44 via a downlink control channel (PDCCH) affiliated to the frequency hopping channel, or the frequency hopping resource may also be transmitted by the first transmitting unit 42 to the terminal via the downlink control channel (PDCCH) corresponding to the dominant frequency point A in the communication system, however, when the frequency hopping channel has no control channel, the first transmitting unit 42 uses the downlink control channel of the dominant frequency point L to transmit control plane information of the frequency hopping channel.

By means of the present embodiment, the network side device receives a connection establishment request, then the network side device transmits a frequency hopping resource corresponding to a cell covered by the network side device to a terminal according to the connection establishment request, and the terminal performs frequency hopping according to the frequency hopping resource. A novel frequency hopping method of a LTE system is provided, and the method can effectively reduce interferences in same-frequency networking in the LTE system. A problem of only adopting a technical solution with high implementation complexity in the related to eliminate interferences in the same-frequency networking in the LTE system art is solved, and then an effect of eliminating interferences in the same-frequency networking in the LTE system under a condition of low implementation complexity is achieved.

In further embodiment, software for performing technical solutions described in the embodiments and preferred implementations is further provided.

In yet another embodiment, a storage medium in which the above-mentioned software is stored is further provided, including, but not limited to, an optical disk, a floppy disk, a hard disk, a rewritable memory, and the like.

For example, a computer-readable storage medium is provided, the computer-readable storage medium stores executable instructions that, when executed by an electronic device, cause the electronic device to:

receive a connection establishment request; and transmit a frequency hopping resource corresponding to a cell covered by a network side device to a terminal according to the request; wherein the network side device and the terminal are located in a same communication system adopting same-frequency networking;

or, transmit a connection establishment request to a network side device; receive a frequency hopping resource, which is transmitted by the network side device, corresponding to a cell covered by the network side device, wherein the network side device 20 and the terminal are located in a same communication system adopting same-frequency networking; and perform frequency hopping according to the frequency hopping resource.

It will be apparent to those skilled in the art that the above-described modules or steps of the present invention may be implemented with a general-purpose computing device, which may be focused on a single computing device or distributed over a network consisting of multiple computing devices; optionally, they may be implemented with a program code executable by the computing device, so that they may be stored in a storage device for being executed by the computing device; and in some cases, steps shown or described may be performed in a different order from that described herein, or implemented by fabricating them into individual integrated circuit modules, respectively, or implemented by fabricating multiple modules or steps in them into a single integrated circuit module. In this way, the present invention is not limited to any particular combination of hardware and software.

**Industrial Applicability**

By means of the technical solution provided by the present invention, a network side device receives a connection establishment request, then the network side device transmits a frequency hopping resource corresponding to a cell covered by the network side device to a terminal according to the connection establishment request, and the terminal performs frequency hopping according to the frequency hopping resource. A novel frequency hopping method of a LTE system is provided, and the method can effectively reduce interferences in same-frequency networking in the LTE system. A problem of only adopting a technical solution with high implementation complexity in the related art to eliminate interferences in the same-frequency networking in the LTE system is solved, and then an effect of eliminating interferences in the same-frequency networking in the LTE system under a condition of low implementation complexity is achieved.

**Claims**

1. A frequency hopping method, comprising:

   receiving (S102) a connection establishment request by a network side device; and
   transmitting (S104), by the network side device, a frequency hopping resource corresponding to a cell covered by the network side device to a terminal according to the request;
   wherein the network side device and the terminal are located in a same communication system adopting same-frequency networking; **characterized in that**,
   the frequency hopping resource comprises frequency hopping frequency point set, wherein the frequency point set is a frequency hopping set of a traffic channel without dominant frequency point; wherein the dominant frequency point comprises one of:
   frequency point where a supplemental channel SCH is located, frequency point where a physical broadcast channel PBCH is located, and frequency point where a downlink control channel PDCCH is located.

2. The method according to claim 1, wherein the frequency hopping resource further comprises at least one of frequency hopping time interval, frequency hopping frequency offset, frequency hopping mode, and frequency hopping sequence, wherein the frequency hopping mode comprises cyclic frequency hopping mode or random frequency hopping mode.

3. The method according to claim 2, wherein the frequency hopping time interval comprises one of:
   time of one subframe, time of one time slot, and time of one orthogonal frequency division multiplexing, OFDM, symbol.

4. The method according to claim 2, wherein the frequency hopping sequence meets a following condition:

$$HS = \{f_{\mod((i+O)/N)}\}, \ 0 \leq i \leq L-1,$$

   wherein HS denotes the frequency hopping sequence, i denotes a serial number of a frequency hopping frequency point, O denotes the frequency hopping frequency offset, L denotes a length of the frequency hopping sequence, and N denotes number of cells.

5. The method according to claim 2, wherein in a case that the frequency hopping mode is the random frequency hopping mode, different random frequency hopping sequences are orthogonal.

6. The method according to claim 1, wherein a manner of transmitting (S104), by the network side device, the frequency hopping resource corresponding to the cell covered by the network side device to the terminal according to the request comprises one of:

   transmitting the frequency hopping resource to the terminal through a physical downlink control channel PDCCH corresponding to a dominant frequency point in the communication system;
   transmitting the frequency hopping resource to the terminal through a downlink control channel PDCCH affiliated to a frequency hopping channel accessed by the terminal.

7. A frequency hopping method, comprising:

   transmitting (S202) a connection establishment request to a network side device;
   receiving (S204) a frequency hopping resource, which is transmitted by the network side device, corresponding to a cell covered by the network side device, wherein the network side device and the terminal are located in a same communication system adopting same-frequency networking; and
   performing (S206) frequency hopping according to the frequency hopping resource; **characterized in that**,
   the frequency hopping resource comprises frequency hopping frequency point set, wherein the frequency point set is a frequency hopping set of a traffic channel without dominant frequency point; wherein the dominant frequency point comprises one of:
frequency point where a supplemental channel SCH is located, frequency point where a physical broadcast channel PBCH is located, and frequency point where a downlink control channel PDCCH is located.

8. A frequency hopping device, which is applied to a network side device, comprising:

a receiving module (32), which is configured to receive a connection establishment request;
a transmitting module (34), which is configured to transmit a frequency hopping resource corresponding to a cell covered by the network side device to a terminal according to the request, wherein the network side device and the terminal are located in a same communication system adopting same-frequency networking; **characterized in that**,
the frequency hopping resource comprises frequency hopping frequency point set, wherein the frequency point set is a frequency hopping set of a traffic channel without dominant frequency point; wherein the dominant frequency point comprises one of:
frequency point where a supplemental channel SCH is located, frequency point where a physical broadcast channel PBCH is located, and frequency point where a downlink control channel PDCCH is located.

9. The device according to claim 8, wherein the frequency hopping resource further comprises at least one of frequency hopping time interval, frequency hopping frequency offset, frequency hopping mode, and frequency hopping sequence, wherein the frequency hopping mode comprises cyclic frequency hopping mode or random frequency hopping mode.

10. The device according to claim 9, wherein the frequency hopping sequence meets a following condition:

$$HS = \{f_{mod((i+O)/N)}\}, \ 0 \leq i \leq L-1,$$

wherein HS denotes the frequency hopping sequence, i denotes a serial number of a frequency hopping frequency point, O denotes the frequency hopping frequency offset, L denotes a length of the frequency hopping sequence, and N denotes number of cells.

11. The device according to claim 9, wherein in a case that the frequency hopping mode is the random frequency hopping mode, different random frequency hopping sequences are orthogonal.

12. The device according to claim 8, wherein the transmitting module (34) comprises at least one of:

a first transmitting unit (42), which is configured to transmit the frequency hopping resource to the terminal through a downlink control channel PDCCH corresponding to a dominant frequency point in the communication system; and
a second transmitting unit (44), which is configured to transmit the frequency hopping resource to the terminal through a downlink control channel PDCCH affiliated to a frequency hopping channel accessed by the terminal.

13. A frequency hopping device, which is applied to a terminal comprising:

a transmitting module (52), which is configured to transmit a connection establishment request to a network side device;
a receiving module (54), which is configured to receive a frequency hopping resource, which is transmitted by the network side device, corresponding to a cell covered by the network side device, wherein the network side device and the terminal are located in a same communication system adopting same-frequency networking; and
a frequency hopping module (56), which is configured to perform frequency hopping according to the frequency hopping resource; **characterized in that**,
the frequency hopping resource comprises frequency hopping frequency point set, wherein the frequency point set is a frequency hopping set of a traffic channel without dominant frequency point; wherein the dominant frequency point comprises one of:
frequency point where a supplemental channel SCH is located, frequency point where a physical broadcast channel PBCH is located, and frequency point where a downlink control channel PDCCH is located.

14. A computer-readable storage medium storing executable instructions that, when executed by an electronic device, cause the electronic device to:

receive (S102) a connection establishment request; and transmit (S104) a frequency hopping resource corresponding to a cell covered by a network side device to a terminal according to the request; wherein the network side device and the terminal are located in a same communication system adopting same-frequency networking;

or, transmit (S202) a connection establishment request to a network side device; receive (S204) a frequency hopping resource, which is transmitted by the network side device, corresponding to a cell covered by the network side device, wherein the network side device and the terminal are located in a same communication system adopting same-frequency networking; and perform (S206) frequency hopping according to the frequency hopping resource; **characterized in that**,

the frequency hopping resource comprises frequency hopping frequency point set, wherein the frequency point set is a frequency hopping set of a traffic channel without dominant frequency point; wherein the dominant frequency point comprises one of:

frequency point where a supplemental channel SCH is located, frequency point where a physical broadcast channel PBCH is located, and frequency point where a downlink control channel PDCCH is located.


**Patentansprüche**

1.   Frequenzsprungverfahren, Folgendes umfassend:

Empfangen (S102) einer Verbindungsherstellungsanfrage durch eine netzwerkseitige Vorrichtung; und

Übertragen (S104), durch die netzwerkseitige Vorrichtung, einer Frequenzsprungressource, die einer Zelle entspricht, die durch die netzwerkseitige Vorrichtung abgedeckt ist, an ein Endgerät gemäß der Anfrage; wobei sich die netzwerkseitige Vorrichtung und das Endgerät in einem selben Kommunikationssystem befinden, das eine Vernetzung bei gleicher Frequenz übernimmt; **dadurch gekennzeichnet, dass** die Frequenzsprungressource eine Frequenzsprungfrequenzpunkteinstellung umfasst, wobei die Frequenzpunkteinstellung eine Frequenzsprungeinstellung eines Verkehrskanals ohne dominanten Frequenzpunkt ist; wobei der dominante Frequenzpunkt eines von Folgendem umfasst:

einen Frequenzpunkt, an dem sich ein Zusatzkanal SCH befindet, einen Frequenzpunkt, an dem sich ein physischer Rundfunkkanal PBCH befindet, und einen Frequenzpunkt, an dem sich ein Downlink-Steuerkanal PDCCH befindet.

2.   Verfahren nach Anspruch 1, wobei die Frequenzsprungressource ferner mindestens eines von einem Frequenzsprungzeitintervall, einer Frequenzsprungfrequenzverschiebung, einem Frequenzsprungmodus und einer Frequenzsprungsequenz umfasst, wobei der Frequenzsprungmodus einen zyklischen Frequenzsprungmodus oder einen Zufallsfrequenzsprungmodus umfasst.

3.   Verfahren nach Anspruch 2, wobei das Frequenzsprungzeitintervall eines von Folgendem umfasst: eine Zeit eines Subframes, eine Zeit eines Zeitschlitzes und eine Zeit eines orthogonalen Frequenzmultiplexierungssymbols (OFDM-Symbol).

4.   Verfahren nach Anspruch 2, wobei die Frequenzsprungsequenz folgende Bedingung erfüllt:

$$HS = \left\{ f_{mod((i+O)/N)} \right\}, 0 \le i \le L - 1,$$

wobei HS die Frequenzsprungsequenz ist, i eine Seriennummer eines Frequenzsprungfrequenzpunkts ist, O die Frequenzsprungfrequenzverschiebung ist, L eine Länge der Frequenzsprungsequenz ist und N die Anzahl der Zellen ist.

5.   Verfahren nach Anspruch 2, wobei für den Fall, dass der Frequenzsprungmodus der Zufallsfrequenzsprungmodus ist, verschiedene Zufallsfrequenzsprungsequenzen orthogonal sind.

6.   Verfahren nach Anspruch 1, wobei eine Art der Übertragung (S104), durch die netzwerkseitige Vorrichtung, der Frequenzsprungressource, die der Zelle entspricht, die durch die netzwerkseitige Vorrichtung abgedeckt ist, an das Endgerät gemäß der Anfrage, eines von Folgendem umfasst:

Übertragen der Frequenzsprungressource an das Endgerät durch einen physischen Downlink-Steuerkanal PDCCH, der einem dominanten Frequenzpunkt in dem Kommunikationssystem entspricht;
Übertragen der Frequenzsprungressource an das Endgerät durch einen physischen Downlink-Steuerkanal PDCCH, der zu einem Frequenzsprungkanal gehört, auf den das Endgerät zugreift.

7.   Frequenzsprungverfahren, Folgendes umfassend:

Übertragen (S202) einer Verbindungsherstellungsanfrage an eine netzwerkseitige Vorrichtung;Empfangen (S204) einer Frequenzsprungressource, die durch die netzwerkseitige Vorrichtung übertragen wird, die einer Zelle entspricht, die durch die netzwerkseitige Vorrichtung abgedeckt ist, wobei sich die netzwerkseitige Vorrichtung und das Endgerät in einem selben Kommunikationssystem befinden, das eine Vernetzung bei gleicher Frequenz übernimmt; und

Durchführen (S206) eines Frequenzsprungs gemäß der Frequenzsprungressource; **dadurch gekennzeichnet, dass** die Frequenzsprungressource eine Frequenzsprungfrequenzpunkteinstellung umfasst, wobei die Frequenzpunkteinstellung eine Frequenzpunkteinstellung eines Verkehrskanals ohne dominanten Frequenzpunkt ist; wobei der dominante Frequenzpunkt eines von Folgendem umfasst: einen Frequenzpunkt, an dem sich ein Zusatzkanal SCH befindet, einen Frequenzpunkt, an dem sich ein physischer Rundfunkkanal PBCH befindet, und einen Frequenzpunkt, an dem sich ein Downlink-Steuerkanal PDCCH befindet.

8. Frequenzsprungvorrichtung, die an einer netzwerkseitigen Vorrichtung angebracht ist, Folgendes umfassend:

ein Empfangsmodul (32), das dazu konfiguriert ist, eine Verbindungsherstellungsanfrage zu empfangen;
ein Übertragungsmodul (34), das dazu konfiguriert ist, eine Frequenzsprungressource, die einer Zelle entspricht, die durch die netzwerkseitige Vorrichtung abgedeckt ist, an ein Endgerät gemäß der Anfrage zu übertragen, wobei sich die netzwerkseitige Vorrichtung und das Endgerät in einem selben Kommunikationssystem befinden, das eine Vernetzung bei gleicher Frequenz übernimmt; **dadurch gekennzeichnet, dass** die Frequenzsprungressource eine Frequenzsprungfrequenzpunkteinstellung umfasst, wobei die Frequenzpunkteinstellung eine Frequenzsprungeinstellung eines Verkehrskanals ohne dominanten Frequenzpunkt ist; wobei der dominante Frequenzpunkt eines von Folgendem umfasst:
einen Frequenzpunkt, an dem sich ein Zusatzkanal SCH befindet, einen Frequenzpunkt, an dem sich ein physischer Rundfunkkanal PBCH befindet, und einen Frequenzpunkt, an dem sich ein Downlink-Steuerkanal PDCCH befindet.

9. Vorrichtung nach Anspruch 8, wobei die Frequenzsprungressource ferner mindestens eines von einem Frequenzsprungzeitintervall, einer Frequenzsprungfrequenzverschiebung, einem Frequenzsprungmodus und einer Frequenzsprungsequenz umfasst, wobei der Frequenzsprungmodus einen zyklischen Frequenzsprungmodus oder einen Zufallsfrequenzsprungmodus umfasst.

10. Vorrichtung nach Anspruch 9, wobei die Frequenzsprungsequenz folgende Bedingung erfüllt:

$$HS = \{f_{mod((i+O)/N)}\}, 0 \leq i \leq L - 1,$$

wobei HS die Frequenzsprungsequenz ist, i eine Seriennummer eines Frequenzsprungfrequenzpunkts ist, O die Frequenzsprungfrequenzverschiebung ist, L eine Länge der Frequenzsprungsequenz ist und N die Anzahl der Zellen ist.

11. Vorrichtung nach Anspruch 9, wobei für den Fall, dass der Frequenzsprungmodus der Zufallsfrequenzsprungmodus ist, verschiedene Zufallsfrequenzsprungsequenzen orthogonal sind.

12. Vorrichtung nach Anspruch 8, wobei das Übertragungsmodul (34) mindestens eines von Folgendem umfasst:

eine erste Übertragungseinheit (42), die dazu konfiguriert ist, die Frequenzsprungressource durch einen Downlink-Steuerkanal PDCCH, der einem dominanten Frequenzpunkt in dem Kommunikationssystem entspricht, an das Endgerät zu übertragen; und
eine zweite Übertragungseinheit (44), die dazu konfiguriert ist, die Frequenzsprungressource durch einen Downlink-Steuerkanal PDCCH, der zu einem Frequenzsprungkanal gehört, auf den das Endgerät zugreift, an das Endgerät zu übertragen.

13. Frequenzsprungvorrichtung, die an einem Endgerät angebracht ist, Folgendes umfassend:

ein Übertragungsmodul (52), das dazu konfiguriert ist, eine Verbindungsherstellungsanfrage an eine netzwerkseitige Vorrichtung zu übertragen;
ein Empfangsmodul (54), das dazu konfiguriert ist, eine Frequenzsprungressource zu empfangen, die durch die netzwerkseitige Vorrichtung übertragen wird, die einer Zelle entspricht, die durch die netzwerkseitige Vorrichtung abgedeckt ist, wobei sich die netzwerkseitige Vorrichtung und das Endgerät in einem selben Kommunikationssystem befinden, das eine Vernetzung bei gleicher Frequenz übernimmt; und
ein Frequenzsprungmodul (56), das dazu konfiguriert ist, einen Frequenzsprung gemäß der Frequenzsprungressource durchzuführen; **dadurch gekennzeichnet, dass** die Frequenzsprungressource eine Frequenzsprungfrequenzpunkteinstellung umfasst, wobei die Frequenzpunkteinstellung eine Frequenzsprungeinstellung eines Verkehrskanals ohne dominanten Frequenzpunkt ist; wobei der dominante Frequenzpunkt eines von Folgendem umfasst:

einen Frequenzpunkt, an dem sich ein Zusatzkanal SCH befindet, einen Frequenzpunkt, an dem sich ein physischer Rundfunkkanal PBCH befindet, und einen Frequenzpunkt, an dem sich ein Downlink-Steuerkanal PDCCH befindet.

14. Computerlesbares Speichermedium, das ausführbare Anweisungen speichert, die, wenn sie durch eine elektronische Vorrichtung ausgeführt werden, die elektronische Vorrichtung zu Folgendem veranlassen:

Empfangen (S102) einer Verbindungsherstellungsanfrage; und Übertragen (S104) einer Frequenzsprungressource, die einer Zelle entspricht, die durch eine netzwerkseitige Vorrichtung abgedeckt ist, an ein Endgerät gemäß der Anfrage; wobei sich die netzwerkseitige Vorrichtung und das Endgerät in einem selben Kommunikationssystem befinden, das eine Vernetzung bei gleicher Frequenz übernimmt; oder Übertragen (S202) einer Verbindungsherstellungs-anfrage an eine netzwerkseitige Vorrichtung; Empfangen (S204) einer Frequenzsprungressource, die durch die netzwerkseitige Vorrichtung übertragen wird, die einer Zelle entspricht, die von der netzwerkseitigen Vorrichtung abgedeckt ist, wobei sich die netzwerkseitige Vorrichtung und das Endgerät in einem selben Kommunikationssystem befinden, das eine Vernetzung bei gleicher Frequenz übernimmt; und Durchführen (S206) eines Frequenzsprungs gemäß der Frequenzsprungressource; **dadurch gekennzeichnet, dass** die Frequenzsprungressource eine Frequenzsprungfrequenz-punkteinstellung umfasst, wobei die Frequenzpunkteinstellung eine Frequenzsprungeinstellung eines Verkehrskanals ohne dominanten Frequenzpunkt ist; wobei der dominante Frequenzpunkt eines von Folgendem umfasst: einen Frequenzpunkt, an dem sich ein Zusatzkanal SCH befindet, einen Frequenzpunkt, an dem sich ein physischer Rundfunkkanal PBCH befindet, und einen Frequenzpunkt, an dem sich ein Downlink-Steuerkanal PDCCH befindet.

**Revendications**

1. Procédé de saut de fréquence, comprenant :

la réception (S102) d'une demande d'établissement de connexion par un dispositif côté réseau ; et

la transmission (S104), par le dispositif côté réseau, d'une ressource de saut de fréquence correspondant à une cellule couverte par le dispositif côté réseau à un terminal conformément à la demande ;
dans lequel le dispositif côté réseau et le terminal sont situés dans le même système de communication dans des réseaux de même fréquence ; **caractérisé en ce que**,
la ressource de saut de fréquence comprend un ensemble de points de fréquence de saut de fréquence, dans lequel l'ensemble de points de fréquence est un ensemble de sauts de fréquence d'un canal de trafic sans point de fréquence dominante ; dans lequel le point de fréquence dominante comprend l'un parmi :
un point de fréquence dans lequel se trouve un canal supplémentaire SCH, un point de fréquence dans lequel se trouve un canal de diffusion physique PBCH, et un point de fréquence dans lequel se trouve un canal de commande de liaison descendante PDCCH.

2. Procédé selon la revendication 1, dans lequel la ressource de saut de fréquence comprend en outre au moins l'un parmi un intervalle de temps de saut de fréquence, un décalage de fréquence de saut de fréquence, un mode de saut de fréquence, et une séquence de saut de fréquence, dans lequel le mode de saut de fréquence comprend un mode de saut de fréquence cyclique ou un mode de saut de fréquence aléatoire.

3. Procédé selon la revendication 2, dans lequel l'intervalle de temps de saut de fréquence comprend l'un parmi :
un symbole de temps d'une sous-trame, un symbole de temps d'un créneau temporel, et un symbole de temps de multiplexage par répartition orthogonale de la fréquence, OFDM.

4. Procédé selon la revendication 2, dans lequel la séquence de saut de fréquence respecte la condition suivante :

$$HS = \{f_{mod((i+O)/N)}\}, \quad 0 \leq i \leq L-1,$$

dans lequel HS représente la séquence de saut de fréquence, i représente un numéro de série d'un point de fréquence de saut de fréquence, O représente le décalage de fréquence du saut de fréquence, L représente une longueur de la séquence de saut de fréquence, et N représente le nombre de cellules.

5. Procédé selon la revendication 2, dans lequel dans le cas où le mode de saut de fréquence est le mode de saut de fréquence aléatoire, différentes séquences de saut de fréquence aléatoire sont orthogonales.

6. Procédé selon la revendication 1, dans lequel une façon de transmettre (S104), par le dispositif côté réseau, la ressource de saut de fréquence correspondant à la cellule couverte par le dispositif côté réseau au terminal conformément à la demande comprend l'un parmi :

la transmission de la ressource de saut de fréquence au terminal par l'intermédiaire d'un canal de commande de liaison descendante PDCCH correspondant à un point de fréquence dominante dans le système de communication ; la transmission de la ressource de saut de fréquence au terminal par l'intermédiaire d'un canal de commande de liaison descendante PDCCH affilié à un canal de saut de fréquence auquel accède le terminal.

7. Procédé de saut de fréquence, comprenant :

la transmission (S202) d'une demande d'établissement de connexion à un dispositif côté réseau ; la réception (S204) d'une ressource de saut de fréquence, qui est transmise par le dispositif côté réseau, correspondant à une cellule couverte par le dispositif côté réseau, dans lequel le dispositif côté réseau et le terminal sont situés dans un même système de communication dans des réseaux de même fréquence ; et la réalisation (S206) du saut de fréquence conformément à la ressource de saut de fréquence ; **caractérisé en ce que**, la ressource de saut de fréquence comprend un ensemble de points de fréquence de saut de fréquence, dans lequel l'ensemble de points de fréquence est un ensemble de sauts de fréquence d'un canal de trafic sans point de fréquence dominante ; dans lequel le point de fréquence dominante comprend l'un parmi : un point de fréquence dans lequel se trouve un canal supplémentaire SCH, un point de fréquence dans lequel se trouve un canal de diffusion physique PBCH, et un point de fréquence dans lequel se trouve un canal de commande de liaison descendante PDCCH.

8. Dispositif de saut de fréquence, qui est appliqué à un dispositif côté réseau, comprenant :

un module de réception (32), qui est configuré pour recevoir une demande d'établissement de connexion ; un module de transmission (34), qui est configuré pour transmettre une ressource de saut de fréquence correspondant à une cellule couverte par le dispositif côté réseau à un terminal conformément à la demande, dans lequel le dispositif côté réseau et le terminal sont situés dans le même système de communication dans des réseaux de même fréquence ; **caractérisé en ce que**, la ressource de saut de fréquence comprend un ensemble de points de fréquence de saut de fréquence, dans lequel l'ensemble de points de fréquence est un ensemble de sauts de fréquence d'un canal de trafic sans point de fréquence dominante ; dans lequel le point de fréquence dominante comprend l'un parmi : un point de fréquence dans lequel se trouve un canal supplémentaire SCH, un point de fréquence dans lequel se trouve un canal de diffusion physique PBCH, et un point de fréquence dans lequel se trouve un canal de commande de liaison descendante PDCCH.

9. Dispositif selon la revendication 8, dans lequel la ressource de saut de fréquence comprend en outre au moins l'un parmi un intervalle de temps de saut de fréquence, un décalage de fréquence de saut de fréquence, un mode de saut de fréquence, et une séquence de saut de fréquence, dans lequel le mode de saut de fréquence comprend un mode de saut de fréquence cyclique ou un mode de saut de fréquence aléatoire.

10. Dispositif selon la revendication 9, dans lequel la séquence de saut de fréquence respecte la condition suivante :

$$HS = \{f_{mod((i+O)/N)}\}, \quad 0 \leq i \leq L-1,$$

dans lequel HS représente la séquence de saut de fréquence, i représente un numéro de série d'un point de fréquence de saut de fréquence, O représente le décalage de fréquence du saut de fréquence, L représente une longueur de la séquence de saut de fréquence, et N représente le nombre de cellules.

11. Dispositif selon la revendication 9, dans lequel dans le cas où le mode de saut de fréquence est le mode de saut de fréquence aléatoire, différentes séquences de saut de fréquence aléatoire sont orthogonales.

12. Dispositif selon la revendication 8, dans lequel le module de transmission (34) comprend au moins l'un parmi :

une première unité de transmission (42), qui est configurée pour transmettre la ressource de saut de fréquence au terminal par l'intermédiaire d'un canal de commande de liaison descendante PDCCH correspondant à un point de fréquence dominante dans le système de communication ; et

une deuxième unité de transmission (44), qui est configurée pour transmettre la ressource de saut de fréquence au terminal par l'intermédiaire d'un canal de commande de liaison descendante PDCCH affilié à un canal de saut de fréquence auquel accède le terminal.

13. Dispositif de saut de fréquence, qui est appliqué à un terminal comprenant :

un module de transmission (52), qui est configuré pour transmettre une demande d'établissement de connexion à un dispositif côté réseau ;

un module de réception (54), qui est configuré pour recevoir une ressource de saut de fréquence, qui est transmise par le dispositif côté réseau, correspondant à une cellule couverte par le dispositif côté réseau, dans lequel le dispositif côté réseau et le terminal sont situés dans un même système de communication dans des réseaux de même fréquence ; et

un module de saut de fréquence (56), qui est configuré pour réaliser le saut de fréquence selon la ressource de saut de fréquence ; **caractérisé en ce que**,

la ressource de saut de fréquence comprend un ensemble de points de fréquence de saut de fréquence, dans lequel l'ensemble de points de fréquence est un ensemble de sauts de fréquence d'un canal de trafic sans point de fréquence dominante ; dans lequel le point de fréquence dominante comprend l'un parmi :

un point de fréquence dans lequel se trouve un canal supplémentaire SCH, un point de fréquence dans lequel se trouve un canal de diffusion physique PBCH, et un point de fréquence dans lequel se trouve un canal de commande de liaison descendante PDCCH.

14. Support de stockage lisible par ordinateur stockant des instructions exécutables qui, lorsqu'elles sont exécutées par un dispositif électronique, amènent le dispositif électronique :

à recevoir (S102) une demande d'établissement de connexion ; et à transmettre (S104) une ressource de saut de fréquence correspondant à une cellule couverte par un dispositif côté réseau à un terminal conformément à la requête ; dans lequel le dispositif côté réseau et le terminal sont situés dans un même système de communication dans des réseaux de même fréquence ;

ou, à transmettre (S202) une demande d'établissement de connexion à un dispositif côté réseau ; à recevoir (S204) une ressource de saut de fréquence, qui est transmise par le dispositif côté réseau, correspondant à une cellule couverte par le dispositif côté réseau, dans lequel le dispositif côté réseau et le terminal sont situés dans un même système de communication dans des réseaux de même fréquence ; et à réaliser (S206) le saut de fréquence selon la ressource de saut de fréquence ;

**caractérisé en ce que**, la ressource de saut de fréquence comprend un ensemble de points de fréquence de saut de fréquence, dans lequel l'ensemble de points de fréquence est un ensemble de sauts de fréquence d'un canal de trafic sans point de fréquence dominante ; dans lequel le point de fréquence dominante comprend l'un parmi :

un point de fréquence dans lequel se trouve un canal supplémentaire SCH, un point de fréquence dans lequel se trouve un canal de diffusion physique PBCH, et un point de fréquence dans lequel se trouve un canal de commande de liaison descendante PDCCH.

Receive a connection establishment request by a network side device — S102

Transmit, by the network side device, a frequency hopping resource corresponding to a cell covered by the network side device, to a terminal according to the request — S104

## FIG. 1

Transmit a connection establishment request to a network side device — S202

Receive a frequency hopping resource, which is transmitted by the network side device, corresponding to a cell covered by the network side device — S204

Perform frequency hopping according to the frequency hopping resource — S206

## FIG. 2

Receiving module 32

Transmitting module 34

## FIG. 3

Receiving module 32

First transmitting unit 42

Second transmitting unit 44

Transmitting module 34

FIG. 4

Transmitting module 52

Receiving module 54

Frequency hopping module 56

FIG. 5

UE side — Initiate a wireless connection establishment request by UE — eNodeB side — S602

Allocate a frequency hopping resource by an eNodeB via an DCI of a main PDCCH — S604

Adjust a frequency point set and a RB resource by the eNodeB according to measurements — S606

**FIG. 6**

FIG. 7

EP 3 267 711 B1

10ms frame structure

| Subframe 0 | | | | | | | Subframe 1 | | | | | | |
|---|---|---|---|---|---|---|---|---|---|---|---|---|---|
| OFDM Symbol0 | OFDM Symbol1 | OFDM Symbol2 | OFDM Symbol3 | OFDM Symbol4 | OFDM Symbol5 | OFDM Symbol6 | | | | | | | |

$g_0$ $\quad$ $g_1$ $\quad$ $g_2$ $\quad$ $g_0$ $\quad$ $g_1$ $\quad$ $g_2$ → TRX MIMO group 1

$g_1$ $\quad$ $g_2$ $\quad$ $g_0$ $\quad$ $g_1$ $\quad$ $g_2$ $\quad$ $g_0$ → TRX MIMO group 2

$g_2$ $\quad$ $g_0$ $\quad$ $g_1$ $\quad$ $g_2$ $\quad$ $g_0$ $\quad$ $g_1$ → TRX MIMO group 3

FIG. 8

**REFERENCES CITED IN THE DESCRIPTION**

**Patent documents cited in the description**

- US 2005078737 A1, CRAIG STEPHEN
- US 2014036864 A1, ARNOTT ROBERT
- US 6272348 B1, SAARIO EIJA
- US 2012114014 A1, GAAL PETER